# EUROPÄISCHE PATENTSCHRIFT

(11) **EP 3 967 581 B1**
(45) Veröffentlichungstag und Bekanntmachung des Hinweises auf die Patenterteilung: **11.01.2023**
(21) Anmeldenummer: 21193648.9
(22) Anmeldetag: 27.08.2021
(51) Int. Cl.: B62D 35/00, B62D 37/02

(54) **HEBELGETRIEBE FÜR EINEN RADWINDABWEISER SOWIE VERFAHREN ZUM BETRIEB EINES HEBELGETRIEBES MIT ÜBERLASTSCHUTZ**
LEVER MECHANISM FOR A WHEEL DEFLECTOR AND METHOD FOR OPERATING A LEVER MECHANISM WITH OVERLOAD PROTECTION
MÉCANISME À LEVIER POUR UN DÉFLECTEUR DE VENT DE ROUE, AINSI QUE PROCÉDÉ DE FONCTIONNEMENT D'UN MÉCANISME À LEVIER POURVU DE PROTECTION CONTRE LES SURCHARGES

(30) Priorität: 10.09.2020 DE 102020211399; 04.12.2020 DE 102020215389
(43) Veröffentlichungstag der Anmeldung: 16.03.2022
(73) Patentinhaber: Magna Exteriors GmbH, 63877 Sailauf (DE)
(72) Erfinder: KNAUER, Bernd, 70199 Stuttgart (DE)
(74) Vertreter: Rausch, Gabriele

(56) Entgegenhaltungen:
- DE-A1-102016 210 407
- DE-A1-102018 123 487
- DE-A1-102018 132 356
- US-A1- 2020 010 128
- US-A1- 2020 094 889

## Beschreibung

Die Erfindung betrifft ein Hebelsystem für einen Radwindabweiser mit einem ersten und zweiten Hebel, die über ein Gelenk miteinander verdrehbar verbunden sind.

Die Erfindung betrifft auch ein Verfahren zum Betrieb eines Hebelsystems für einen Radwindabweiser.

### Stand der Technik

Um bei beweglichen Systemen einzelne Elemente anzusteuern, wird üblicherweise eine Kinematik aus Hebelwerken verwendet.

Beispielsweise werden Klappen im Außenbereich eines Kraftfahrzeugs verstellt. Ein Beispiel ist eine Optimierung eines ausfahrbaren Radspoilers, wie er aus der WO 2017 098 106 A1 bekannt ist bekannt ist. Beschrieben ist eine aerodynamische Wind-Abweiservorrichtung für das Rad eines Kraftfahrzeugs, umfassend: eine an einem Träger zwischen einer eingefahrenen Stellung, in der die Umlenkwand gegenüber dem Träger in montiertem Zustand anhebbar ist, und einer ausgefahrenen Stellung, in der die Umlenkwand gegenüber dem Träger abgesenkt ist. Ein mit der Umlenkwand verbundenen Aktuator ist dazu ausgebildet, die Umlenkwand zwischen der eingefahrenen und der ausgefahrenen Position zu bewegen.

Aus der DE 10 2017 214 769 A1 ist ein verstellbarere Radspoiler bekannt, bei dem ein quasi-linearer großer Verstellweg mit einer Verstellführung zwei miteinander über ein gemeinsames Schwenkgelenk gekoppelte Viergelenkgetriebe erreicht wird. Die beiden Viergelenkgetriebe können durch Kopplung miteinander über einen weiten Bereich ihres Bewegungsbereichs eine lineare oder quasi-lineare Bewegung des mit dem Anströmkörper-Verbindungsbereich verbundenen Anströmkörpers sicherstellen.

Solche Hebel-Systeme sind in der Regel nicht gegen Überlast geschützt, da eine Integration eines Schutzmechanismus aufwändig und daher nicht wirtschaftlich ist. Wenn ein Überlastschutz zwingend notwendig ist, wird dieser in der Regel als einzelne Kupplung oder integriert im Verstell-Aktuator vorgesehen und bedingt dadurch ein weiteres System oder Bauraumbedarf mit zusätzlichem Aufwand. Dadurch entstehen entweder Nachteile für die Funktion des Bauteils oder erhöhte Produktkosten.

US 2015 / 0 198 414 A1 zeigt ein Hebelsystem für ein Klappvisier einer Feuerwaffe. Die Visieranordnungen enthalten einen federbelasteten Drehzapfen, der konfiguriert ist, einen Arm schwenkbar mit einer Basis zu koppeln. Dabei ist einen Raststellung vorhanden.

DE 401 597 A zeigt einen Hebel mit Dämpfungselement für schwenkbare Bauteile.

DE 689 04 773 T2 zeigt eine Türschliesseinrichtung mit Hebelarmen.

WO 2020 079 263 A1 zeigt einen Windabweiser mit einem Hebelwerk, wobei ein zweiter Hebel an einem beweglichen Teil angelankt ist.

GB 1 381 114 A zeigt einen Rastmechanismus, in dem einen in einer Hülse geführte federbelastete Kugel zum Einsatz kommt.

DE 10 2018 123 487 A1 zeigt eine federbelastete Rastkupplung, die auf Keilen basiert.

Aufgabe der Erfindung ist es ein Hebelantrieb für einen Radwindabweiser mit Aktuator auszugestalten, wobei ein Überlastschutz geboten wird, der die kostengünstige Auslegung eines beweglichen Systems auf Sonderereignisse im Betrieb ermöglicht.

Die Gestaltung des Überlastschutzes soll die Anpassung auf verschiedene Lastfälle ermöglichen und ohne Sonderfunktionen des Antriebs eine reversible Auslösung bei definierten Kraftniveaus bieten.

Die Lösung der Aufgabe erfolgt erfindungsgemäß durch die Merkmale des Anspruchs 1.

Die Lösung ist ein Hebelsystem für einen Radwindabweiser mit einem ersten und zweiten Hebel, die über ein Gelenk miteinander verdrehbar verbunden sind, wobei das Gelenk mindestens eine Kugel in einer Hülse, eine Feder und eine Abstützung enthält, wobei die Kugel eine Grundposition in einer Ausnehmung des zweiten Hebels aufweist und in der Überlastsituation auf einer äußeren Kontur der zweiten Hebels führbar ist.

Durch diesen mechanischen Überlastschutz kann das Hebelsystem ausweichen, ohne dass ein Schaden eintritt.

Vorteilhafterweise besteht der erste Hebel aus zwei Hebelarmen, die über eine Verbindungsspange baulich miteinander verbunden sind. Die Verbindungsspange dient dabei als eine Komponente eines Anschlags.

Der erste Hebel ist an einer Befestigungsplatte antriebswirksam befestigt. Die Befestigungsplatte ist ein Träger und dient zur Aufnahme der Komponenten, also auch eines Aktuators, als Anbindung an ein Fahrzeug und als weitere Komponente eines Anschlags.

Es ist von Vorteil, dass der zweite Hebel eine Führungsbahn für die Kugel aufweist, die in geschwungener Form der Außenform des zweiten Hebels angepasst ist.

Das bewegliche Bauteil ist endständig am zweiten Hebel sowie am anderen Ende drehbar an einem festen Anlenkpunkt angebracht ist. Damit ist das Gelenk zwischen ersten und zweiten Hebel drehbar.

Die Aufgabe wird des Weiteren gelöst von einem Verfahren zum Betrieb eines Hebelsystems für einen Radwindabweiser, wobei bei einer auftretenden Kraft am beweglichen Bauteil die Kugel aus der Ausnehmung am zweiten Hebel gedrückt wird und die Kugel entlang einer Führungsbahn läuft, wenn der zweite Hebel in Bezug auf den ersten Hebel ausweicht.

Es entsteht dabei einen Rutschkupplung, die durch vorbestimmt Kräfte ausgelöst wird und wartungsfrei wieder in den Grundzustand überführt werden kann.

Nach dem Ausweichen wird das Hebelsystem wieder in den Ausgangszustand versetzt, indem der Aktuator den ersten Hebel gegen einen Anschlag fährt.

### Beschreibung der Figuren

Figur 1 zeigt ein Hebelgetriebe im Zusammenbau,

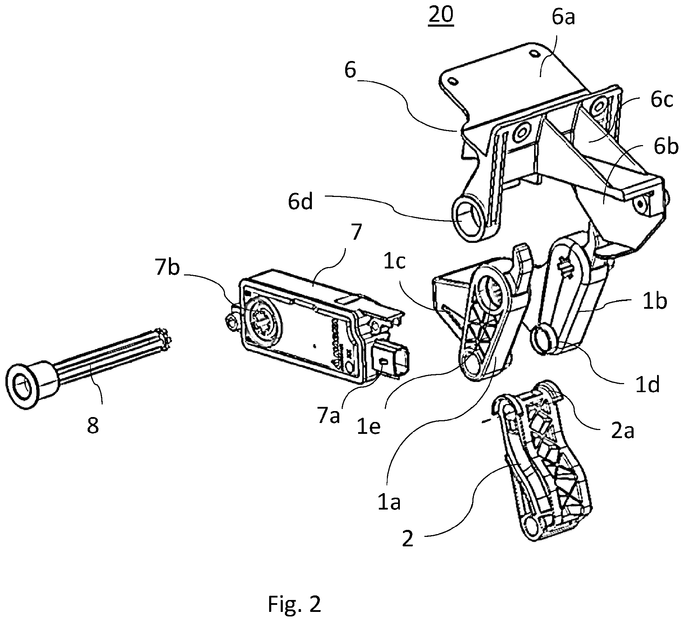

Figur 2 zeigt das Hebelgetriebes in Komponenten zerlegt,
Figur 3 zeigt die beiden Hebel des Hebelgetriebes,
Figur 4 zeigt einen Querschnitt des Hebelgetriebes einen Aufnahmeadapter,
Figur 5 zeigt eine Vergrößerung einer Hülse,
Figur 6 zeigt einen Führungsschlitten mit Rollen,

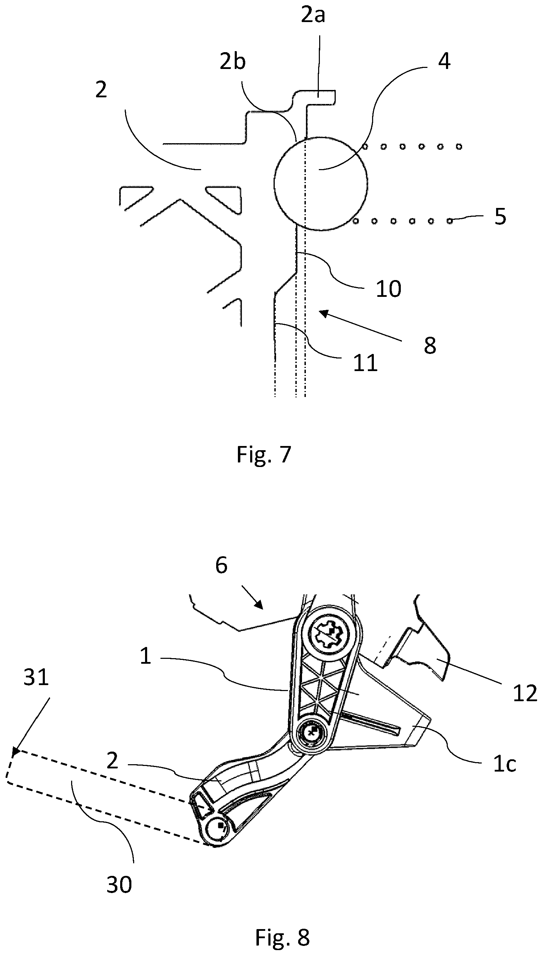

Figur 7 zeigt ein Detail des Hebelgetriebes,
Figur 8 zeigt einen Längsschnitt.

Ein Hebelgetriebe 20 besteht aus einem zweigeteilten Aufbau mit einem ersten Hebel 1 und einem zweiten Hebel 2. Der erste Hebel 1 wird an einer Befestigungsplatte 6 gelenkig befestigt, die wiederum an einem Fahrzeug verbaut ist. Die Befestigungsplatte des Ausführungsbeispiels weist einen Teilbereich 6a zur Verschraubung am Fahrzeug auf, sowie eine Halterung 6b für einen Aktuator 7.

Die Halterung 6b bildet einen Aufnahmeraum für den Aktuator 7, in den dieser gesteckt wird, wobei ein elektrischer Steckverbinder 7a zugänglich bleibt. Über Rippen 6c wird die Halterung 6b an der Befestigungsplatte 6 angebunden und stabilisiert.

Die Befestigungsplatte 6 weist an ihrer äußeren Erstreckung Lageraufnahmen 6d auf, die zur Führung einer Welle 8 dienen.

Der Aktuator ist gekapselt und mit einem, in dem Gehäuse des Aktuators 7 liegenden Antriebszahnrad 7b ausgestattet.

Der erste Hebel 1 besteht aus zwei Armen 1a und 1b, die über eine Verbindungsspange 1c miteinander baulich verbunden sind. Die beiden Arme 1a und 1b weisen an einem Ende eine durchgängige Innenverzahnung 1e auf und an dem andern Ende der Arme eine ringförmiges Auflager 1d an einer Durchgangsbohrung 1f. Das Auflager 1d liegt zwischen den beiden Armen 1a und 1b und dient als Lager für den zweiten Hebel 2, der halbschalenförmige Kappen 2a aufweist. Benachbart zur Innenverzahnung 1e sind am Habel 1 an den jeweiligen Armen 1a, 1b hakenförmige Fortsätze 1g angebracht.

Der zweite Hebel 2 ist an seinem den Kappen 2a gegenüberliegenden Ende mit einer Klappe, beispielsweise einem Radwindabweiser verbunden, der nicht dargestellt ist.

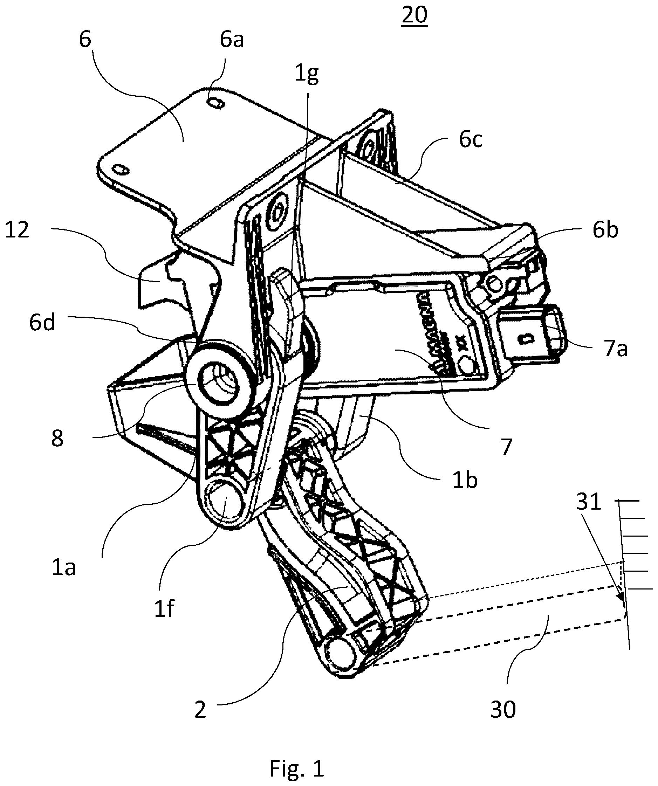

In der Figur 1 sieht man im Zusammenbau, dass der Aktuator 7 in den Aufnahmeraum der Befestigungsplatte gesteckt ist. Der erste Hebel ist innerhalb der Befestigungsplatte montiert, indem die Welle 8 durch die Lageraufnahmen 6 d der Befestigungsplatte 6 , danach durch die Innenverzahnung 1e des einen Arms 1a des ersten Hebels 1, danach durch das Antriebsrad 7b des Aktuators 7 und die weitere Innenverzahnung 1e des Armes 1b des Hebels 1 und die weitere Lageraufnahme 6d der Befestigungsplatte 6 gesteckt wird.

Der Hebel 2 wird auf die Auflager 1d der Hebels 1 aufgesteckt und bildet eine Achse A2 aus.

Mit der Betätigung des Aktuators 7 dreht sich der Hebel 1 um die von der Welle 8 gebildeten Achse A1 und verschwenkt damit den Hebel 2. Das am Hebel 2 angebrachte Bauteil 30 verschenkt somit mit um einen Anlenkpunkt 31.

Trifft das Bauteil, also beispielsweise der Radwindabweiser, auf einen Widerstand, muss der Überlastschutz ansprechen, um eine Zerstörung des Aktuators 7 oder des Hebelantriebs 20 oder des Radwindabweisers zu vermeiden.

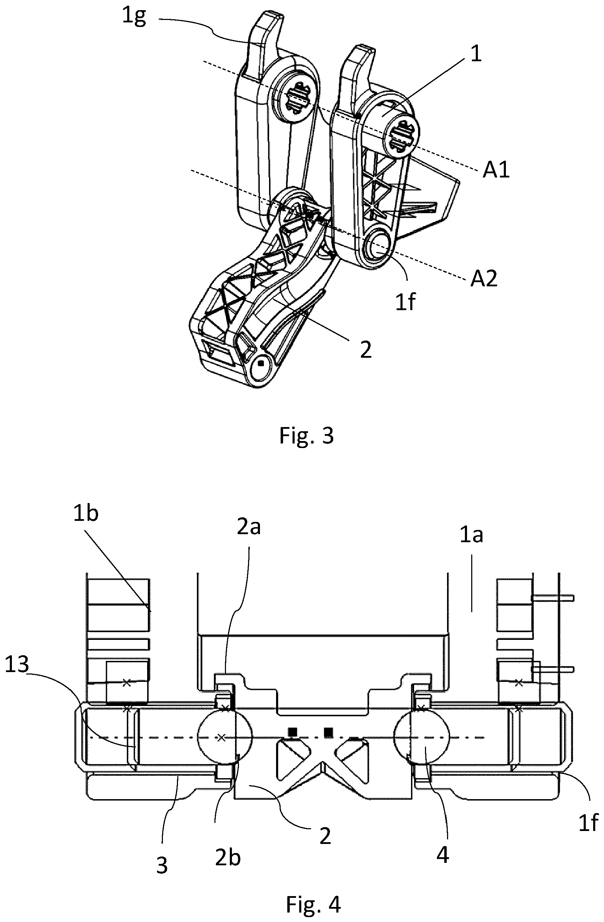

Figur 4 zeigt einen Schnitt entlang der Achse A2 und zeigt die Verbindung der Hebel 1 und 2. Die Durchgangsbohrungen 1f des ersten Hebels enthält jeweils einen Hülse 3, die eine Kugel 4 endständig teilweise umfasst. Der aus der Hülse 3 ragende Teil der Kugel 4 ruht in einer entsprechenden Ausnehmung 2b des zweiten Hebels 2 in einer Grundposition.

Die Kugel 4 ist mit einer Feder 5 vorgespannt. Die Feder 5 stützt sich an einem Verschlussstück 13 ab. Die Federbelastung ist dabei durch die Positionierung des Verschlussstücks 13 in der Hülse 3 einstellbar.

Alternativ dazu kann auch eine einstückige Version aus Hülse 3 und Verschlussstück 13 verbaut werden.

Mit der Verbindung über die federbelastete Kugel 4 ist der Regelbetrieb innerhalb des eingestellten Anpressdrucks möglich. Der Anpressdruck definiert damit auch die Basiskraft B, die der Aktuator als Nullpunkt gespeichert hat.

Im Falle einer Überlastung am Hebel 2 bei Verstellung durch den Aktuator 7 entsteht eine Kraftkomponente in Gegenrichtung zur Basiskraft B und die Kugel 4 wird dadurch aus der Ausnehmung 2b gepresst.

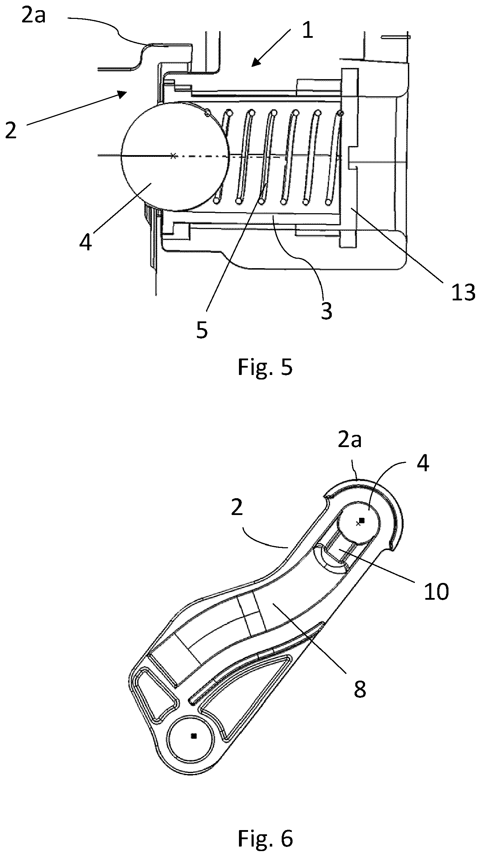

Wie in der Figur 5 dargestellt, bewegt sich der zweite Hebel 2 gegen die Kugel 4, wobei die Kugel bei weitere Bewegung auf das erste Niveau 10 des zweiten Hebels 2 gleitet, um dann auf das zweite Niveau 11 zu rutschen, wenn der zweite Hebel weiterhin auf einen Widerstand stößt. Durch die unterschiedlichen Niveaus 10 und 11 des zweiten Hebels 2 wird eine Führungsbahn 8 für die Kugel 4 ausgebildet. Diese erstreckt sich, wie in der Figur 6 gezeigt entlang der Erstreckung des zweiten Hebels 2 in leicht gekrümmter Form.

Ist also der Widerstand so groß, dass das gewünschtem Kraftniveau der Auslösekraft erreicht ist, wird die Kugel 4 in die Führungsbahn 8 freigegeben und ermöglicht das Ausweichen des zweiten Hebel 2 gegenüber dem ersten Hebel 1 und vermeidet so die Überbelastung des Systems. Die Auslösekraft ist für den Aktuator zuvor fest eingestellt, um diesen vor Schaden zu schützen.

Das Kraftniveau wird dabei genügend groß gewählt, um eine Verstellung des Hebels 1 zu erreichen und dem Aktuator die Erkennung des Ereignisses zu ermöglichen.

Um das Hebelsystem 20 wieder in den funktionsfähigen Zustand zu bringen wird der erste Hebel 1 mit dem zweiten Hebel 2 von dem Aktuator 7 gegen einen Anschlag 12 geschwenkt und die Kugel 4 über die Geometrie der Führungsbahn 8 in die vorgesehene Lagerposition in der Ausnehmung 2b gebracht. Der Anschlag 12 ist dabei an der Befestigungsplatte 2 angebracht und wirkt direkt auf die Kugel 4 ein.

Der Aktuator erkennt die Auslösung des Überlastschutzes durch die schnelle Verstellung der Lage, also durch schnelle Änderung der Verstellkraft.

Zur Herstellung der Ausgangslage des Überlastschutzes verstellt der Aktuator 7 den ersten Hebel 1 in Schließposition. Beim Schließvorgang wird die Kugel 4 wieder in die Ausnehmung 2b gedrückt.

Schließlich befindet sich das Hebelsystem 20 wieder in der funktionsfähigen Grundposition.

## Patentansprüche

1. Hebelsystem (20) für einen bewegliche Radwindabweiser (30), der an einem Fahrzeug angebracht ist, mit einem ersten und zweiten Hebel (1, 2), die über ein Gelenk miteinander verdrehbar verbunden sind, wobei das Gelenk mindestens eine Kugel (4) in einer Hülse (3), eine Feder (5) und eine Befestigungsplatte (6) enthält, wobei die Kugel (4) eine Grundposition in einer Ausnehmung (2b) des zweiten Hebels (2) aufweist und zudem im ersten Hebel (1) gelagert ist und in einer Überlastsituation durch Widerstand am beweglichen Bauteil (30) auf einer äußeren Kontur des zweiten Hebels (2) führbar ist.

2. Hebelsystem (20) nach Anspruch 1, **dadurch gekennzeichnet, dass** der erste Hebel (1) aus zwei Hebelarmen (1a, 1b) besteht, die über eine Verbindungsspange (1c) baulich miteinander verbunden sind.

3. Hebelsystem (20) nach Anspruch 1 oder 2, **dadurch gekennzeichnet, dass** der erste Hebel (1) an der Befestigungsplatte (6) antriebswirksam befestigt ist.

4. Hebelsystem (20) nach einem der vorhergehenden Ansprüche, **dadurch gekennzeichnet, dass** die Befestigungsplatte (6) eine Aufnahme für einen Aktuator (7) bildet.

5. Hebelsystem (20) nach einem der vorhergehenden Ansprüche, **dadurch gekennzeichnet, dass** der zweite Hebel (2) eine Führungsbahn (8) für die Kugel (4) aufweist, die in geschwungener Form der Außenform des zweiten Hebels (2) angepasst ist.

6. Hebelsystem (20) nach einem der vorhergehenden Ansprüche, **dadurch gekennzeichnet, dass** das bewegliche Bauteil (30) endständig am zweiten Hebel (2) sowie am anderen Ende drehbar an einem festen Anlenkpunkt (31) angebracht ist.

7. Verfahren zum Betrieb eines Hebelsystem (20) für einen Radwindabweiser (30) , der an einem Fahrzeug angebracht ist, nach einem der vorhergehenden Ansprüche, wobei bei einer auftretenden Kraft am beweglichen Bauteil (30) die Kugel (4) aus der Ausnehmung (2b) am zweiten Hebel gedrückt wird und die Kugel entlang einer Führungsbahn (8) läuft, wenn der zweite Hebel (2) in Bezug auf den ersten Hebel (1) ausweicht.

8. Verfahren zum Betrieb eines Hebelsystem (20) nach Anspruch 7, wobei nach dem Ausweichen das Hebelsystem wieder in den Ausgangszustand versetzt wird, indem der Aktuator (7) den ersten Hebel (1) gegen einen Anschlag (12) fährt.

## Claims

1. Lever system (20) for a movable wheel wind deflector (30) which is fitted to a vehicle, having a first lever and a second lever (1, 2) which are rotatably connected to each other by means of an articulation, wherein the articulation contains at least one ball (4) in a sleeve (3), a spring (5) and a securing plate (6), wherein the ball (4) has a basic position in a recess (2b) of the second lever (2) and is additionally supported in the first lever (1) and in an overload situation as a result of resistance on the movable component (30) can be guided on an outer contour of the second lever (2).

2. Lever system (20) according to claim 1, **characterised in that** the first lever (1) comprises two lever arms (1a, 1b) which are structurally connected to each other by means of a connection clip (1c).

3. Lever system (20) according to claim 1 or 2, **characterised in that** the first lever (1) is secured to the securing plate (6) so as to be effective in terms of driving.

4. Lever system (20) according to any one of the preceding claims, **characterised in that** the securing plate (6) forms a receiving member for an actuator (7).

5. Lever system (20) according to any one of the preceding claims, **characterised in that** the second lever (2) has a guiding path (8) for the ball (4) which is adapted in a curved form to the outer form of the second lever (2).

6. Lever system (20) according to any one of the preceding claims, **characterised in that** the movable component (30) is fitted terminally to the second lever (2) and is rotatably fitted at the other end to a fixed articulation location (31).

7. Method for operating a lever system (20) for a wheel wind deflector (30) which is fitted to a vehicle according to any one of the preceding claims, wherein, in the event of a force occurring on the movable component (30), the ball (4) is pressed out of the recess (2b) on the second lever and the ball runs along a guiding path (8) when the second lever (2) gives way with respect to the first lever (1).

8. Method for operating a lever system (20) according to claim 7, wherein after giving way the lever system is moved into the initial state again by the actuator (7) moving the first lever (1) against a stop (12).

## Revendications

1. Système à levier (20) pour un déflecteur de vent de roue mobile (30), qui est monté sur un véhicule, comprenant un premier et un deuxième levier (1, 2) qui sont reliés à rotation l'un à l'autre par le biais d'une articulation, l'articulation contenant au moins une bille (4) dans une douille (3), un ressort (5) et une plaque de fixation (6), la bille (4) présentant une position de base dans un évidement (2b) du deuxième levier (2) et étant en outre logée dans le premier levier (1) et pouvant être guidée dans une situation de surcharge par résistance sur le composant mobile (30) sur un contour extérieur du deuxième levier (2).

2. Système à levier (20) selon la revendication 1, **caractérisé en ce que** le premier levier (1) est constitué de deux bras de levier (1a, 1b) qui sont reliés structurellement l'un à l'autre par le biais d'une barrette de liaison (1c).

3. Système à levier (20) selon la revendication 1 ou 2, **caractérisé en ce que** le premier levier (1) est fixé à la plaque de fixation (6) de manière active pour l'entraînement.

4. Système à levier (20) selon l'une quelconque des revendications précédentes, **caractérisé en ce que** la plaque de fixation (6) forme un logement pour un actionneur (7).

5. Système à levier (20) selon l'une quelconque des revendications précédentes, **caractérisé en ce que** le deuxième levier (2) présente une voie de guidage (8) pour la bille (4), qui est adaptée sous forme arquée à la forme extérieure du deuxième levier (2).

6. Système à levier (20) selon l'une quelconque des revendications précédentes, **caractérisé en ce que** le composant mobile (30) est monté à l'extrémité sur le deuxième levier (2) ainsi que sur l'autre extrémité de manière rotative à un point d'articulation fixe (31).

7. Procédé de fonctionnement d'un système à levier (20) pour un déflecteur de vent de roue (30), qui est monté sur un véhicule, selon l'une quelconque des revendications précédentes, dans lequel, lorsqu'une force est appliquée au composant mobile (30), la bille (4) est poussée hors de l'évidement (2b) sur le deuxième levier et la bille se déplace le long d'une voie de guidage (8) lorsque le deuxième levier (2) s'écarte par rapport au premier levier (1).

8. Procédé de fonctionnement d'un système à levier (20) selon la revendication 7, dans lequel, après l'écartement, le système à levier est remis dans l'état initial par le fait que l'actionneur (7) déplace le premier levier (1) contre une butée (12).
